# EUROPEAN PATENT SPECIFICATION

(11) **EP 3 046 023 B1**
(45) Date of publication and mention of the grant of the patent: **08.05.2019**
(21) Application number: 15188905.2
(22) Date of filing: 08.10.2015
(51) Int. Cl.: G06F 9/44

(54) **PHOTOVOLTAIC SYSTEM**
PHOTOVOLTAIKANLAGE
SYSTÈME PHOTOVOLTAIQUE

(30) Priority: 19.01.2015 KR 20150008775
(43) Date of publication of application: 20.07.2016
(73) Proprietor: LSIS Co., Ltd., Anyang-si, Gyeonggi-do 431-848 (KR)
(72) Inventor: CHO, Choong Kun, Anyang-si, Gyeonggi-do 431-8 (KR)
(74) Representative: K&L Gates LLP

(56) References cited:
- EP-A1- 2 189 859
- EP-A2- 2 031 505
- CN-A- 103 384 089
- JP-A- 2006 215 803
- US-A1- 2003 182 414
- US-A1- 2004 031 029
- US-A1- 2008 071 942
- US-A1- 2011 221 269
- US-A1- 2014 068 597

## Description

### BACKGROUND

The present disclosure relates to a photovoltaic system, and particularly, to an efficient firmware update for the photovoltaic system.

Interest in alternative energy is picking up due to depletion of fossil energy such as petroleum and concern about environmental pollution. Among them, photovoltaic power generation is being spotlighted which generates electricity on a mass scale by deploying a panel in large scale with a photovoltaic cell attached thereon to use solar energy. Since the photovoltaic power generation uses solar energy that is unlimited and pollution-free, there is no occurrence of air pollution or wastes.

There are two photovoltaic power generation types of an off-grid type and on-grid type. In the off-grid type, a photovoltaic device is connected to a stand-alone load that is not connected to a grid. In the on-grid type, a photovoltaic device is connected to an existing grid. The photovoltaic device transmits electricity, which is generated in the daytime, to the grid and receives electricity from the grid at night or in case of rain. In order to efficiently use the on-grid type photovoltaic system, a photovoltaic system is introduced for storing idle power in a Battery Energy Storage System (BESS) in case of a light load, and for supplying power discharged from the BESS in addition to power from the photovoltaic device to the grid in case of overload.

Many photovoltaic monitoring systems using data loggers are used in the field. Photovoltaic generation may be monitored in a way that the data logger collects data from an inverter and various sensors to deliver the data to an upper layer server and a general user accesses the upper layer server through various paths to check necessary information.

At this point, the data logger and inverter are required to update firmware (i.e. system software) thereof and the firmware update is typically conducted at night because the generated power is to be transmitted in the daytime. However, when the number of inverters is great and the inverters simultaneously update firmware thereof, network traffic congests and firmware is not smoothly updated.

Document US 2011/221269 A1 discloses a power generation system for feeding power from generators into an AC grid, the system comprising a plurality of inverters connected to corresponding ones of the generators, and connected to the AC grid is disclosed. The plurality of inverters forms part of a data network, wherein one of the inverters forms a communication unit for receiving feed-in parameters from a grid control system and for controlling the plurality of inverters via the data network such that the power generation system feeds power to the AC grid in accordance with the feed-in parameters.

Document US 2008/071942 A1 discloses a method to update firmware in a plurality of peripheral devices and a computer using the method to reduce data transmission collisions and to reduce the time required to complete the update process. The process involves sending firmware update data from a computer that is connected to a communication network to printers or other peripheral devices that are also connected to the communication network. The computer 11 groups a plurality of peripheral devices (such as printers 13 a 1) connected to the communication network into separate transmission unit groups each containing up to a maximum number of peripheral devices. The maximum number may be a predefined number or a number set according to the transmission speed of the network. The update data for updating the firmware is transmitted to the peripheral devices of any one transmission unit group. Thereafter update data is sequentially transmitted to the peripheral devices in another transmission unit group but not until the completion of transmitting the update data to all of the peripheral devices in the first transmission unit group is confirmed.

### SUMMARY

Embodiments provide a firmware update method capable of minimizing a traffic overload.

In one embodiment, a photovoltaic system includes: a data collecting device collecting data about photovoltaic generation from a photovoltaic device; and an external device receiving the data about the photovoltaic generation from the data collecting device and providing data update to the data collecting device or photovoltaic device.

The external device may divide the data collecting device into one or more groups according to a predetermined criterion to provide the data update for each group.

The photovoltaic device includes one or more inverters connected to the data collecting device.

The predetermined criterion may include at least one of a time for photovoltaic generation, a number of inverters connected to the data collecting device, and a total size of data provided by the external device.

The time for photovoltaic generation may be a time from sunrise to sunset in an area where the photovoltaic device is installed.

The predetermined criterion may further include a data transmission speed among the external device, data collecting device and inverters.

The external device may set groups in consideration of the predetermined criterion according to a preset priority.

The external device may re-adjust the set groups on the basis of a feedback received from the data collecting device or the inverter.

The feedback may include a feedback about a process of the data update.

The external device may provide the data update on the basis of a communication state with the data collecting device.

In another embodiment, an update server divides the plurality of data collecting devices into groups according to a predetermined criterion to provide the data update for each group.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of an on-grid photovoltaic device according to an embodiment.
Fig. 2 is a block diagram of an on-grid photovoltaic device of a small scale on-grid photovoltaic device according to an embodiment.
Fig. 3 is a flowchart of an on-grid photovoltaic device according to an embodiment.
Fig. 4 illustrates a configuration of a typical photovoltaic generation monitoring system.
Fig. 5 illustrates connection relations among an update server, data logger, and inverter in an entire system.
Fig. 6 illustrates a firmware update method according to an embodiment.
Fig. 7 illustrates an embodiment in which groups are divided based on a sunrise/sunset time in each area.
Fig. 8 illustrates an embodiment in which groups are divided based on the number of inverters connected to a data logger.
Fig. 9 illustrates an embodiment in which groups are divided based on the size of a program to be updated by the data logger.
Fig. 10 illustrates an embodiment in which groups are divided according to communication media between the data logger and inverters.

### DETAILED DESCRIPTION OF THE EMBODIMENTS

Reference will now be made in detail to the embodiments of the present disclosure, examples of which are illustrated in the accompanying drawings.

A photovoltaic system according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

Hereinafter, embodiments of the present invention will be described in detail with reference to the accompanying drawings so that the present invention can be easily realized by those skilled in the art. The present invention can be practiced in various ways and is not limited to the embodiments described herein. In the drawings, parts which are not related to the description are omitted to clearly set forth the present invention and similar elements are denoted by similar reference symbols throughout the specification.

In addition, when an element is referred to as "comprising" or "including" a component, it does not preclude another component but may further include the other component unless the context clearly indicates otherwise.

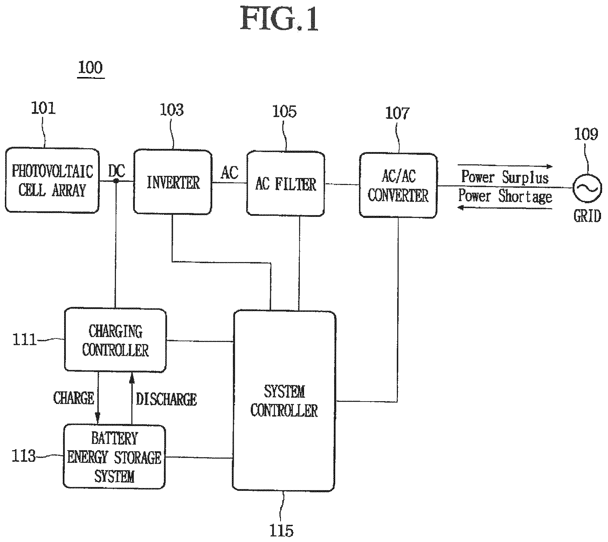

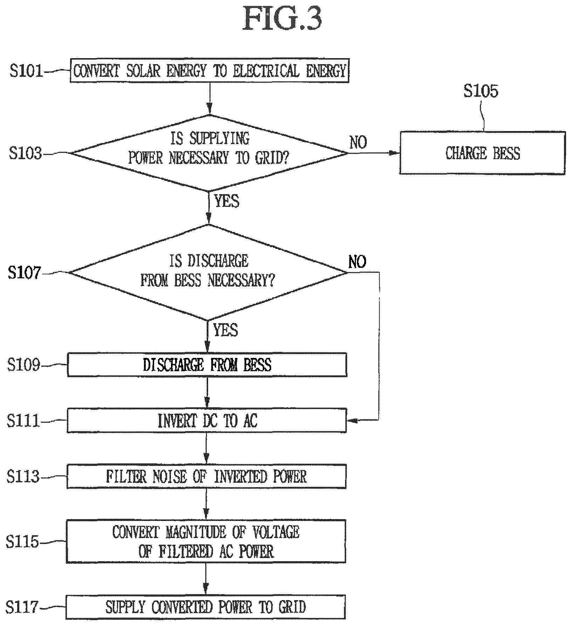

Hereinafter a photovoltaic device according to an embodiment will be described with reference to FIGS. 1 and 3.

Fig. 1 is a block diagram of an on-grid photovoltaic device according to an embodiment.

A photovoltaic device 100 according to an embodiment includes a photovoltaic array 101, an inverter 103, an AC filter 105, an AC/DC converter 107, a grid 109, a charging controller 111, a Battery Energy Storage System (BESS) 113, and a system controller 115.

The photovoltaic cell array 101 is a combination of a plurality of photovoltaic cell modules. The photovoltaic cell module is a device, which is obtained by connecting a plurality of photovoltaic cells in serial or parallel, for converting solar energy to electrical energy to generate a voltage and current. Accordingly, the photovoltaic cell array 101 absorbs the solar energy to convert it to the electrical energy.

The inverter 103 inverts DC power to AC power. The inverter 101 receives, through the charging controller 111, the DC power supplied by the photovoltaic cell array 301 or the DC power discharged from the BESS 113 and inverts the DC power to the AC power.

The AC filter 105 filters noise from the inverted AC power.

The AC/AC converter 107 performs conversion on the magnitude of the AC power that the noise is filtered and supplies the magnitude-converted AC power to the grid 109.

The grid 109 is a system in which a power plant, a substation, a transmission/distribution line, and a load are integrated into one to generate and use power.

The charging controller 111 controls charge of and discharge from the BESS 113. When the grid 109 is overloaded, the charging controller 111 receives power from the BESS 113 to deliver the power to the grid 109. When the grid 109 is light-loaded, the charging controller 111 receives power from the photovoltaic cell array 101 to deliver the power to the BESS 113.

The BESS 113 is charged with electrical energy received from the photovoltaic cell array 101 and discharges the electrical energy according to a power supply-demand situation of the grid 109. In detail, when the grid 109 is light-loaded, the BESS 113 is charged with idle power received from the photovoltaic cell array 101. When the grid 109 is over-loaded, the BESS 113 discharges the power to supply to the grid 109. The power supply-demand situation of the grid is greatly differed for each time zone. Accordingly, it is inefficient that the photovoltaic device 100 uniformly supply the power generated by the photovoltaic cell array 101 without consideration of the power supply-demand situation. Therefore the photovoltaic device 100 adjusts an amount of supplying power according to the power supply-demand situation of the grid 109 by using the BESS 113. Through this, the photovoltaic device 100 may efficiently supply power to the grid 109.

The system controller 115 controls operations of the charging controller 111, inverter 103, AC filter 105, and AC/AC converter 107.

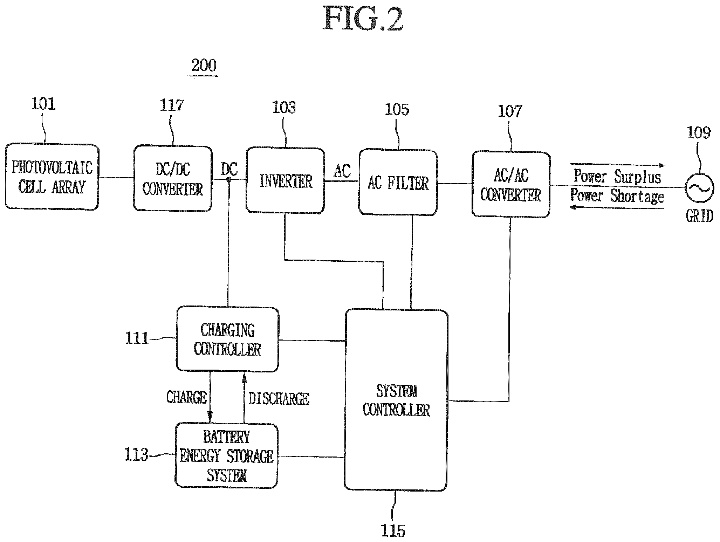

Fig. 2 is a block diagram of an on-grid photovoltaic device of a small scale on-grid photovoltaic device according to an embodiment.

A small scale on-grid photovoltaic device 200 according to an embodiment includes a photovoltaic array 101, an inverter 103, an AC filter 105, an AC/AC converter 107, a grid 109, a charging controller 111, a BESS 113, a system controller 115, and a DC/DC converter 117.

The small scale on-grid photovoltaic device 200 further includes the DC/DC converter 117 in addition to the configuration illustrated in FIG. 1. The DC/DC converter 117 performs conversion on DC power generated by the photovoltaic cell array 101. In the small scale on-grid photovoltaic device 200, a voltage of power generated by the photovoltaic cell array 101 is small. Accordingly, it is necessary to boost the voltage so that the power supplied by the photovoltaic cell array 101 is input to the inverter. The DC/DC converter 117 converts the voltage of power generated by the photovoltaic cell array 101 to a voltage having magnitude enough to be input to the inverter 103.

Fig. 3 is a flowchart of an on-grid photovoltaic device according to an embodiment.

The photovoltaic cell array 101 converts the solar energy to the electrical energy (operation S101).

The system controller 115 determines whether supplying power is necessary to the grid 109 (operation S103). Whether the supplying power is necessary to the grid 109 may be determined on the basis of whether the grid 109 is overloaded or light-loaded.

When the supplying power to the grid 109 is not necessary, the system controller 115 controls the charging controller 111 to charge the BESS 113 (operation S105). In detail, the system controller 115 may generate a control signal for controlling the charging controller 111. The charging controller 111 may receive the control signal to charge the BESS 113.

The system controller 115 determines whether discharge from the BESS 113 is necessary (operation S107). The system controller 115 may determine whether the discharge from the BESS is necessary in a case where power demand of the grid 109 is not satisfied only with electrical energy supplied by the photovoltaic cell array 101. In addition, the system controller 115 may determine whether the BESS 113 stores enough energy to be discharged.

When the discharge from the BESS 113 is necessary, the system controller 115 controls the charging controller 111 to discharge the BESS 113. In detail, the system controller 115 may generate a control signal for controlling the charging controller 111. The charging controller 111 may receive the control signal to discharge the BESS 113.

The inverter 103 inverts, to AC energy, the electrical energy discharged from the BESS 113 and the electrical energy converted by the photovoltaic cell array 101 (operation S111). At this point, the on-grid photovoltaic device 100 conducts, with only one inverter 103, the inversion on the electrical energy discharged from the BESS 113 and the electrical energy converted by the photovoltaic cell array 101. Each electrical device has an available power limit. This limit is divided into an instant limit and a long time use limit, and regulatory power is determined as a maximum power that does not damage a device and is available for a long time. In order to maximize efficiency of the inverter 103, the BESS 113 and the photovoltaic cell array 101 are required to supply power so that the inverter 103 uses power of about 40 % to about 60 % of the regulatory power.

The AC filter 105 filters noise from the inverted AC power (operation S113).

The AC/AC converter 107 performs conversion on the magnitude of voltage of the filtered AC power to supply power to the grid 109 or load 117 (operation S115).

The on-grid photovoltaic device 100 provides the converted power to the grid (operation S117).

Since the on-grid photovoltaic device 100 according to Figs. 1 to 3 uses only one inverter 103, when regulatory power of the inverter 103 is determined according to capacity of the photovoltaic cell array 101 to design the on-grid photovoltaic cell array 100, the following issues occur. When the BESS 113 discharges to supply electrical energy together with the photovoltaic cell array 101, it is difficult to maximize an efficiency of the inverter 103 because the inverter 103 uses power exceeding about 40 % to about 60 % of the regulatory power. Alternatively, when the BESS 113 discharges to independently supply electrical energy, it is difficult to maximize an efficiency of the inverter 103 because the inverter 103 uses power less than about 40 % to about 60% of the regulatory power. Besides, when the solar insolation is small and the photovoltaic cell array 101 supplies small amount of electrical energy, it is difficult to maximize an efficiency of the inverter 103 because the inverter 103 uses power less than about 40 % to about 60% of the regulatory power. In this case, an efficiency that the on-grid photovoltaic device 100 converts the solar energy to the electrical energy is lowered. In addition, a total harmonic distortion (THD) of power becomes high to lower quality of power generated by the on-grid photovoltaic device 100.

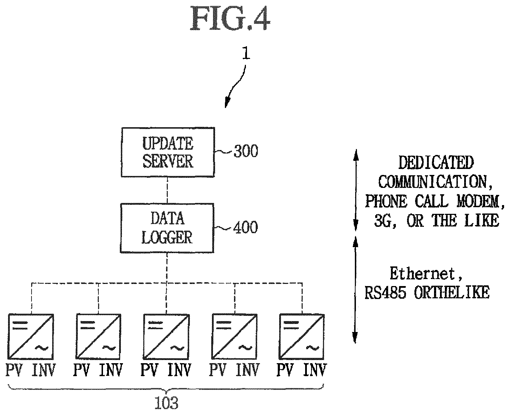

Fig. 4 illustrates a configuration of a typical photovoltaic generation monitoring system.

As illustrated in Fig. 4, a monitoring system 1 may include an update server 300, a data collecting device (i.e. data logger) 400, and a inverter 103. However, the configuration of the monitoring system 1 is not limited to that illustrated in Fig. 4 and an additional configuration may be further included.

The data logger 400 collects data from the inverter 103 and various sensors of the photovoltaic device 100. In an embodiment, the data logger 400 may deliver the collected data to an upper layer server. In this case, the user may access the upper server to monitor the data collected by the data logger 400.

In another embodiment, the data logger 400 may directly provide the collected data to the user. In this case, the data logger 400 delivers the collected data to the controller 115 in the photovoltaic device 100 to be provided to the user. The data logger 400 may be or may not be included in the photovoltaic device 100.

The update server 300 provides firmware of a latest version to the data logger 400 and inverter 103. In detail, the update server 300 includes software of a latest version, wherein the software is installed in the data logger 400 and inverter 103. At the time of updating the firmware, the update server 300 provides latest firmware to the data logger 400 and inverter 103 through diverse paths. The data logger 400 may include a role of the update server 300 for transmitting data.

In addition, the data supplied to the data logger 400 and inverter 103 by the update server 300 may be information on an amount of power generation. In detail, the update server 300 may provide information on an allocated amount of power generation for a predetermined period to the data logger 400 and inverter 103. For example, the update server 300 may provide information that an inverter A fulfills a target amount of 400 KW/day of power generation.

In most cases, the update server 300 is distant away from the data logger 400 and it is necessary to stably transmit massive data. Accordingly, as a data transmission scheme, a dedication line communication, phone call modem, or 3G communication is available, which allows massive data to be stably transmitted.

Furthermore, when the data logger 400 is relatively close to the inverter 103, power generation-related data may be transmitted through Ethernet or RS485 because capacity of the power generation-related data is relatively small. However, the communication scheme between the elements is not limited to the above-described schemes and all the schemes for data transmission may be applicable. In addition, the above-described transmission schemes may be mixed according to the distance between elements or an amount of data.

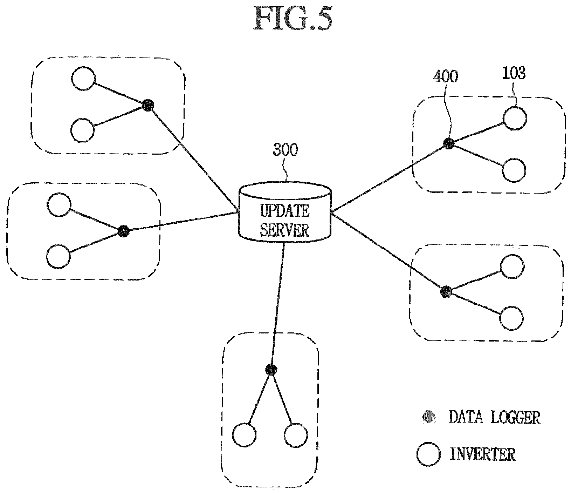

Fig. 5 illustrates a connection relation between the above-described elements in the entire system.

As illustrated in Fig. 5, a plurality of data loggers 400 are connected to the update server 300 and a plurality of inverters 103 are connected to each of the data logger 300. The data logger 400 may be equipped for each photovoltaic device 100, or one data logger 400 may be connected to the plurality of photovoltaic devices 100.

The data logger 400 delivers photovoltaic generation-related data collected from the inverter 103 to the update server 300, which is an upper layer server. On the contrary, the firmware update is received by the data logger 400 from the update server 300, and then is delivered to the inverter 103. The data logger 400 may be connected to the plurality of inverters 103 and accordingly, when the update server 300 transmits the latest firmware to the small number of data loggers 400, the latest firmware may be delivered to multiple inverters 103 through the data loggers 400.

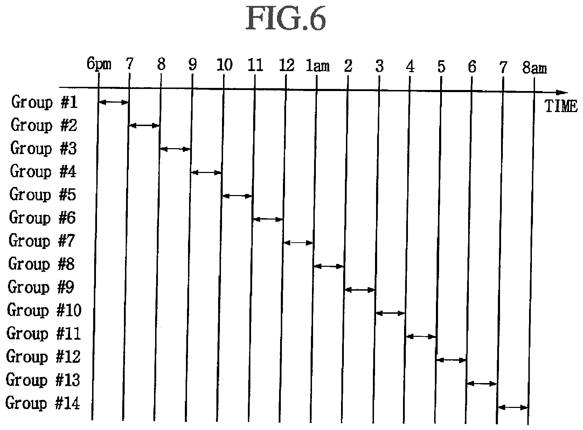

Hereinafter, a method of efficiently updating firmware according to an embodiment will be described with reference to Figs. 6 to 10.

Fig. 6 illustrates a firmware update method according to an embodiment.

Typically, since update of the firmware of the plurality of inverter 103 is conducted at a specific time excluding the daytime when the photovoltaic generation is conducted, the firmware update is concentrated in the specific time and network traffic is overloaded. This causes a great limitation when the number of inverters 103 for connecting to the update server 300 and updating firmware gets larger. This is because the traffic amount becomes greater in proportion to the number of inverters 103.

Accordingly, according to an embodiment, in order to disperse traffic, the update server 300 divides the data loggers 400 or inverters 103 into groups to update firmware, as illustrated in Fig. 6. Referring to Fig. 6, the update server 300 may divide the plurality of data loggers 400 or inverters 103 into 14 groups and allocate a firmware update time for each group.

Accordingly, since the firmware update times do not overlap each other, even though the number of data loggers 400 or inverters 103 is increased, traffic may be dispersed to stabilize the update.

Hereinafter a reference for dividing the groups will be described.

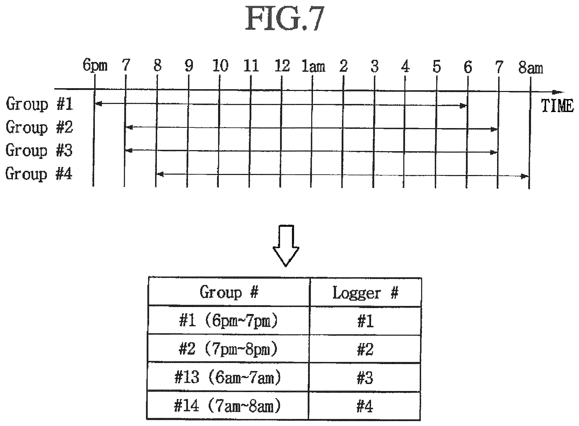

Fig. 7 illustrates an embodiment in which groups are divided for each area on the basis of a time when photovoltaic generation is performed. Here, the time when the photovoltaic generation is performed may mean the daytime between sunrise and sunset.

Normally, the photovoltaic generation is performed in the daytime, and in this period, almost traffic is carried for delivering the photovoltaic generation collected by the data logger 400 from the inverter 103 to the upper layer server (i.e. update server 300). Accordingly, in the daytime, namely, after sunrise and before sunset, it may be efficient to avoid updating the firmware. However, at night, since the photovoltaic generation is not performed, there is a margin in traffic compared to the daytime. Accordingly, in this time period, namely, after sunset and before sunrise, the update server 300 may transmit data for updating firmware to the data logger 400 and inverter 103.

However, since different for each area, the sunrise and sunset times may be used as a reference for dividing the update time.

Referring to Fig. 7, in an area where a data logger 1 is located, the photovoltaic generation is performed from 6 AM to 6 PM, and in an area where data loggers 2 and 3 are located, the photovoltaic generation is performed from 7 AM to 7 PM. In addition, in an area where a data logger 4 is located, the photovoltaic generation is performed from 8 AM to 8 PM.

Accordingly, according to the sunrise and sunset times for each area, as illustrated in a table of Fig. 7, the update server 300 may set the update time to 6 PM to 7 PM for the data logger 1, to 7 PM to 8 PM for the data logger 2, to 6 AM to 7 AM for the data logger 3, and to 7 AM to 8 PM for the data logger 4. Despite of massive firmware update of the set groups, traffic may be dispersed to each time period to secure stability.

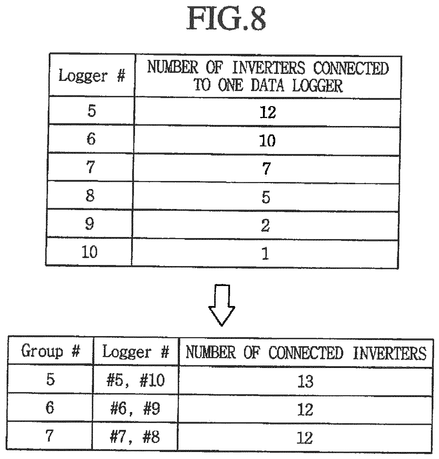

Fig. 8 illustrates an embodiment in which groups are divided based on the number of inverters 103 connected to one data logger 400.

One data logger 400 may be connected to the plurality of inverters 103. As the number of inverters 103 becomes greater, traffic necessary for the firmware update is increased. Accordingly, a network may be efficiently used, when groups of the data loggers 400 are divided in consideration of the number of inverters 103 connected thereto.

Referring Fig. 8, the data logger 5 is connected to 12 inverters, the data logger 6 is connected to 10 inverters, the data logger 7 is connected to 7 inverters, the data logger 8 is connected to 5 inverters, the data logger 9 is connected to 2 inverters, and the data logger 10 is connected to one inverter. Accordingly, the update server 300 may receive information on the number of inverters from the data loggers and divide the data loggers into groups. As the result, the data loggers 5 and 10 may be divided to group 5, the data loggers 6 and 9 may be divided to group 6, and the data loggers 7 and 8 may be divided to group 7. In this case, as illustrated in Fig. 8, the number of inverters for each group is equalized to about 12 or about 13 to efficiently disperse the traffic.

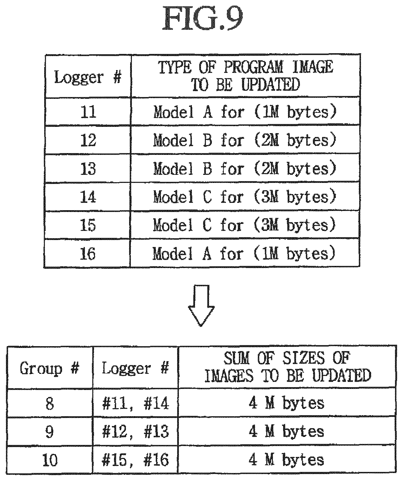

Fig. 9 illustrates an embodiment in which groups are divided based on the size of a program to be updated by the data collecting device 400.

A type of the data logger 400 connected to the update server 300 may be diversified and accordingly different types of firmware may be required. In this case, the size of firmware to be downloaded may be differed for each data logger 400. Therefore, the update server 300 may efficiently use traffic by dividing the data loggers 400 according to the size of the firmware to be downloaded.

A description will be exemplarily described with reference to Fig. 9. As illustrated in Fig. 9, the data logger 11 may have update data of 1 MB, the data logger 12 may have update data of 2 MB, the data logger 13 may have update data of 2 MB, the data logger 14 may have update data of 3 MB, the data logger 15 may have update data of 3 MB, and the data logger 16 may have update data of 1 MB. Therefore, the update server 300 may divide the data loggers 11 and 14 to a group 8, the data logger 12 and 13 to a group 9, and the data logger 15 and 16 to a group 10 so that the size of data to be updated for each time period is equal.

In this case, since the size of the firmware update data is equal to 4 MB for each group, the traffic is dispersed to allow firmware update to be efficiently and stably performed.

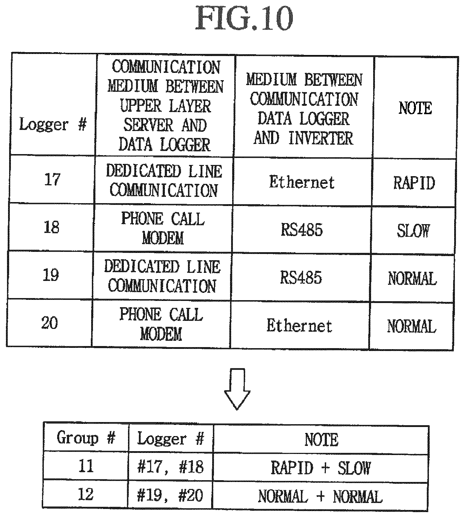

Fig. 10 illustrate an embodiment where groups are divided according to communication media between the update server 300 and data logger 400, and the data logger 400 and inverter 103.

According to the communication media, massive data may be delivered at a single time or vice versa. When only the data loggers 400 or inverters 103, through which rapid transmission is possible, are grouped and an identical update time to that of a group, through which rapid transmission is not possible, is allocated thereto, the traffic and update time are not efficiently used.

Accordingly, as illustrated in Fig. 10, when the data logger 17 has a relatively rapid communication medium and the data logger 18 has a relatively slow communication medium, the update server 300 may update firmware by grouping the data loggers 17 and 18 into one group. The speed of communication medium may be obtained in a way for directly measuring the speed, or may be determined according to a pre-stored speed.

The above-described criterions for dividing groups may be independently applied or mixed to be applied depending on situation. In the case of being mixed, a highly influential factor is prioritized and grouping may be performed with the prioritized factor. The influence may be differed according to an area, climate, attributes of device, or the like.

In addition, even though the group is determined, the update server 300 may re-adjust groups according to a progress of update of some of the data loggers 400 or inverters 103. In detail, when the update is completed earlier or delayed than a reference time, the group may be re-adjusted. At this point, the update server 300 may re-adjust groups on the basis of a feedback received from the data logger 400 or inverter 103.

The update server 300 may provide data update on the basis of a communication state with the data logger 400. In detail, when determining that the communication state with the data logger 400 is not good, the update server 300 may not update the firmware by determining an importance of a latest version of firmware. The importance of firmware may be determined according to a pre-determined priority. For example, in case of update for improving a fatal error, the priority thereof may be set to be front. However, in case of update for improving a user interface (UI), since operation is not greatly influenced by the update, the priority thereof may be set to be back.

The update server 300 may receive information from the data loggers to automatically divide the data loggers into groups or a user may directly divide the data loggers into groups. When the number of inverters 103 connected to the data logger 400 is large and the type thereof is diverse, the data loggers 400 may divide inverters 103 for delivering firmware update according to the above-described method.

According to an embodiment, at the time of updating firmware in a photovoltaic generation monitoring system using a data logger, network traffic overload may be minimized.

In addition, the network traffic overload may be minimized to reduce a burden of failure in updating firmware.

In addition, a risk of stopping photovoltaic generation due to failure in updating firmware may be reduced.

In the foregoing, features, structures, or effects described in connection with embodiments are included in at least one embodiment, and are not necessarily limited to one embodiment. Furthermore, the exemplified features, structures, or effects in various embodiments can be combined and modified by those skilled in the art. Accordingly, contents in connection with these combination and modification should be construed to fall in the scope of the present invention.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A photovoltaic system comprising:
a data collecting device (400) collecting data about photovoltaic generation of a photovoltaic device (100); and an external device (300) receiving the data about the photovoltaic generation from the data collecting device (400) and providing a data update to the data collecting device (400) or to the photovoltaic device (100), **characterized in that** the external device (300) is configured to group the data collecting device (400) into one or more groups according to a predetermined criterion to provide the data update for each group;
wherein the predetermined criterion comprises at least one of a time when the photovoltaic generation is performed, a number of inverters (103) connected to the data collecting device (400) and a size of the data update to be provided.

2. The photovoltaic system according to claim 1, wherein the photovoltaic device (100) comprises one or more inverters (103) connected to the data collecting device (400).

3. The photovoltaic system according to claim 1, wherein the time when photovoltaic generation is performed is a time from sunrise to sunset in an area where the photovoltaic device is installed.

4. The photovoltaic system according to claim 1, wherein the predetermined criterion further comprises a data transmission speed among the external device (300), data collecting device (400) and inverters (103).

5. The photovoltaic system according to claim 1, wherein if the predetermined criterion comprises a mix of the mentioned criteria, at least one of the mentioned criteria is prioritized.

6. The photovoltaic system according to claim 1, wherein the predetermined criterion further comprises a progress of a data update of the data collecting devices (400) or inverters (103) as received from the data collecting devices (400) or the inverters (103).

7. The photovoltaic system according to claim 6, wherein the external device (300) further comprises re-adjusting the groups by grouping the data collecting device (400) into groups based on the predetermined criteria further comprising the progress of the data update.

8. The photovoltaic system according to claim 1, wherein the external device provides the data update on a basis of a communication state with the data collecting device(400).

## Patentansprüche

1. Photovoltaiksystem, umfassend:
eine Datensammelvorrichtung (400), die Daten zur photovoltaischen Erzeugung einer Photovoltaikvorrichtung (100) sammelt; und eine externe Vorrichtung (300), die die Daten über die Photovoltaik-Erzeugung von der Datensammelvorrichtung (400) empfängt und eine Datenaktualisierung an die Datensammelvorrichtung (400) oder an die Photovoltaik-Vorrichtung (100) liefert, **dadurch gekennzeichnet, dass** die externe Vorrichtung (300) konfiguriert ist, die Datensammelvorrichtung (400) gemäß einem vorbestimmten Kriterium in eine oder mehrere Gruppen zu gruppieren, um die Datenaktualisierung für jede Gruppe bereitzustellen;
wobei das vorbestimmte Kriterium mindestens eine Zeitspanne umfasst, zu der die Photovoltaik-Erzeugung durchgeführt wird, eine Anzahl von Wechselrichtern (103), die mit der Datensammelvorrichtung (400) verbunden sind, und eine Größe der Datenaktualisierung, die bereitzustellen ist.

2. Photovoltaiksystem nach Anspruch 1, wobei die Photovoltaikvorrichtung (100) einen oder mehrere Wechselrichter (103) umfasst, die mit der Datensammelvorrichtung (400) verbunden sind.

3. Photovoltaiksystem nach Anspruch 1, wobei die Zeitspanne, zu der die Photovoltaik-Erzeugung durchgeführt wird, eine Zeitspanne von Sonnenaufgang bis Sonnenuntergang in einem Bereich ist, in dem die Photovoltaik-Vorrichtung installiert ist.

4. Photovoltaik-System nach Anspruch 1, wobei das vorbestimmte Kriterium ferner eine Datenübertragungsgeschwindigkeit zwischen der externen Vorrichtung (300), der Datensammelvorrichtung (400) und den Wechselrichtern (103) umfasst.

5. Photovoltaik-System nach Anspruch 1, wobei, wenn das vorbestimmte Kriterium eine Mischung der genannten Kriterien umfasst, mindestens eines der genannten Kriterien priorisiert wird.

6. Photovoltaiksystem nach Anspruch 1, wobei das vorbestimmte Kriterium ferner einen Fortschritt einer Datenaktualisierung der Datensammelvorrichtungen (400) oder Wechselrichter (103) umfasst, wie sie von den Datensammelvorrichtungen (400) oder den Wechselrichtern (103) empfangen werden.

7. Photovoltaik-System nach Anspruch 6, wobei die externe Vorrichtung (300) ferner ein erneutes Anpassen der Gruppen durch Gruppieren der Datenerfassungsvorrichtung (400) in Gruppen basierend auf den vorbestimmten Kriterien umfasst, die ferner den Fortschritt der Datenaktualisierung umfassen.

8. Photovoltaiksystem nach Anspruch 1, wobei die externe Vorrichtung die Datenaktualisierung basierend auf einem Kommunikationszustand mit der Datensammelvorrichtung (400) bereitstellt.

## Revendications

1. Système photovoltaïque comprenant :
un dispositif de collecte de données (400) collectant des données relatives à la génération photovoltaïque d'un dispositif photovoltaïque (100) ; et un dispositif externe (300) recevant les données relatives à la génération photovoltaïque depuis le dispositif de collecte de données (400) et fournissant une actualisation de données au dispositif de collecte de données (400) ou au dispositif photovoltaïque (100), **caractérisé en ce que** le dispositif externe (300) est configuré pour regrouper le dispositif de collecte de données (400) dans un ou plusieurs groupes selon un critère prédéterminé pour fournir l'actualisation de données pour chaque groupe ;
dans lequel le critère prédéterminé comprend au moins un élément parmi un moment auquel la génération photovoltaïque est effectuée, un nombre d'onduleurs (103) connectés au dispositif de collecte de données (400) et une taille de l'actualisation de données à fournir.

2. Système photovoltaïque selon la revendication 1, dans lequel le dispositif photovoltaïque (100) comprend un ou plusieurs onduleurs (103) connectés au dispositif de collecte de données (400).

3. Système photovoltaïque selon la revendication 1, dans lequel le moment auquel la génération photovoltaïque est effectuée est un moment du lever du soleil au coucher du soleil dans une zone où est installé le dispositif photovoltaïque.

4. Système photovoltaïque selon la revendication 1, dans lequel le critère prédéterminé comprend en outre une vitesse de transmission de données entre le dispositif externe (300), le dispositif de collecte de données (400) et les onduleurs (103).

5. Système photovoltaïque selon la revendication 1, dans lequel si le critère prédéterminé comprend un mélange des critères mentionnés, au moins l'un des critères mentionnés est prioritaire.

6. Système photovoltaïque selon la revendication 1, dans lequel le critère prédéterminé comprend en outre une progression d'une actualisation de données des dispositifs de collecte de données (400) ou onduleurs (103) telles que reçues des dispositifs de collecte de données (400) ou des onduleurs (103).

7. Système photovoltaïque selon la revendication 6, dans lequel le dispositif externe (300) comprend en outre le réajustement des groupes par regroupement du dispositif de collecte de données (400) dans des groupes sur la base des critères prédéterminés comprenant en outre la progression de l'actualisation de données.

8. Système photovoltaïque selon la revendication 1, dans lequel le dispositif externe fournit l'actualisation de données sur une base d'un état de communication avec le dispositif de collecte de données (400) .
